(19) Europäisches Patentamt
European Patent Office
Office européen des brevets

(11) Veröffentlichungsnummer: **0 126 405**
**B1**

(12) # EUROPÄISCHE PATENTSCHRIFT

(45) Veröffentlichungstag der Patentschrift: **11.03.87**

(51) Int. Cl.[4]: **C 09 B 29/50,** C 09 B 63/00 // C08K5/23

(21) Anmeldenummer: **84105471.1**

(22) Anmeldetag: **14.05.84**

(54) **Pyrazolonazofarbstoffe.**

(30) Priorität: **18.05.83 DE 3318073**

(43) Veröffentlichungstag der Anmeldung: **28.11.84 Patentblatt 84/48**

(45) Bekanntmachung des Hinweises auf die Patenterteilung: **11.03.87 Patentblatt 87/11**

(84) Benannte Vertragsstaaten: **CH DE FR GB IT LI**

(56) Entgegenhaltungen:
**EP - A - 0 073 972**
**DE - A - 2 616 981**
**DE - B - 1 020 425**
**GB - A - 874 220**
**GB - A - 1 353 521**
**US - A - 4 045 425**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Henning, Georg, Dr., Thorwaldsenstrasse 3, D-6700 Ludwigshafen (DE)**

**EP 0 126 405 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft das Pyrazolonazopigment der Formel I

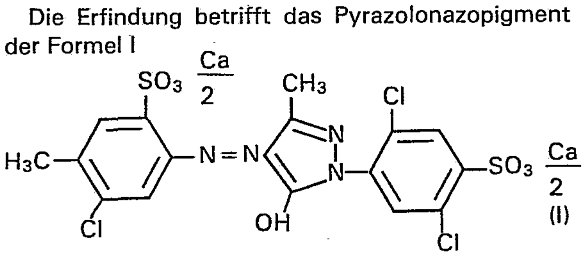

(I)

Die Verbindung der Formel I ist ein wertvolles Pigment zur Einfärbung von Kunststoffen. Es kommen vor allem Polyolefine, wie Polyethylen und Polypropylen, sowie Polystyrol, Polycarbonat und ABS in Betracht. Hervorzuheben sind die hervorragenden Temperaturstabilitäten und Weichmacherechtheiten sowie die sehr gute Licht- und Wetterbeständigkeit. Das Pigment eignet sich auch zum Färben von Lacken.

Zur Herstellung des Farbstoffes der Formel I kann man nach an sich bekannten Methoden das Amin der Formel

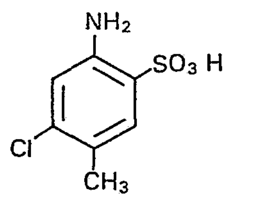

diazotieren und mit dem Pyrazolonderivat kuppeln. Anschliessend kann das Kupplungsprodukt in das Ca-Salz überführt werden. Einzelheiten der Herstellung können dem Beispiel entnommen werden. Angaben über Teile und Prozente beziehen sich dabei, sofern nicht anders vermerkt, auf das Gewicht.

Die erfindungsgemässe Verbindung muss um für die vorgesehenen Zwecke brauchbar zu sein, in wasserfreier Form vorliegen. Bei der üblichen Synthese erhält man jedoch oft kristallwasserhaltige Produkte, die das Wasser auch beim Trocknen unter üblichen Bedingungen nicht verlieren. Überraschenderweise wurde gefunden, dass man nach der Trocknung unter Bedingungen, bei denen auch das Kristallwasser entfernt wird, eine Verbindung erhält, die sich gegenüber den kristallwasserhaltigen z.B. bei Färben von Thermoplasten, durch eine stark erhöhte Temperaturstabilität sowie durch bessere Licht- und Wetterechtheit auszeichnet.

*Beispiel*

22,1 Teile 1-Amino-3-chlor-4-methylbenzol-6-sulfonsäure werden in 200 Teilen Wasser und 8 Teilen Natronlauge (50%ig) gelöst und mit 35 Volumenteilen konzentrierter Salzsäure gefällt. Man kühlt mit Eis auf 0 bis 5°C und diazotiert durch Zugabe von 31 Volumenteilen einer 23%igen Natriumnitritlösung.

Danach löst man 32,3 Teile 1-(2',5'-Dichlor-4'-sulfophenyl)-3-methyl-5-pyrazolon in 200 Teilen Wasser und 7 Teilen Natronlauge (50%ig) und lässt bei 20 bis 25°C die Diazoniumsalzsuspension zulaufen. Durch weitere Zugabe von ungefähr 12 Teilen NaOH gleicher Konzentration wird ein pH-Wert von 5 eingestellt. Nach beendeter Kupplung erwärmt man auf 80°C und versetzt mit 40 Teilen Calciumchlorid, und rührt noch eine Stunde bei dieser Temperatur nach. Dann wird filtriert, mit Wasser gewaschen und bei 120°C getrocknet. Man erhält 60 g des gelben Farblacks der Formel:

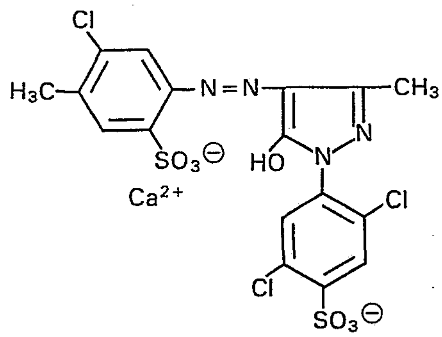

*Anwendungsbeispiel*

*Polyethylen 0,05%ig*

0,05 Teile des gemäss dem Beispiel erhaltenen Farbstoffes werden in einem Trommelmischer mit 100 Teilen Polyethylenpulver (Hochdruckware) trocken gemischt. Das Gemisch wird auf einer Schneckenpresse bei einer Zylindertemperatur von 160 bis 200°C geschmolzen und homogenisiert. Die gefärbte plastische Masse wird durch Heissabschlagen am Düsenkopf oder durch Ausziehen von Fäden unter Kühlung granuliert. Das so erhaltene Granulat wird anschliessend in einer Spritzgussvorrichtung bei 200°C zu Formkörpern verspritzt oder auf Pressen zu beliebigen Körpern gepresst. Man erhält gelbe Presslinge mit ausgezeichneter Lichtechtheit.

*Polystyrol 0,05%ig*

0,05 Teile des gemäss dem Beispiel erhaltenen Farbstoffes werden in einem Trommelmischer mit 100 Teilen gemahlenem Polystyrol-Blockpolymerisat trocken gemischt. Das Gemisch wird auf einer Schneckenpresse bei einer Zylindertemperatur von 200 bis 250°C geschmolzen und homogenisiert. Die gefärbte plastische Masse wird durch Heissabschlagen am Düsenkopf oder durch Ausziehen von Fäden unter Kühlung granuliert. Das so erhaltene Granulat wird anschliessend in einer Spritzgussvorrichtung bei 200 bis 250°C zu Formkörpern verspritzt oder auf Pressen zu beliebigen Körpern gepresst. Man erhält gelbe Spritzlinge mit ausgezeichneter Thermostabilität.

Anstelle von Polystyrol-Blockpolymerisat kann auch ein Polystyrol-Emulsionspolymerisat oder Suspensionspolymerisat bzw. Mischpolymerisat mit Butadien und Acrylnitril oder Acrylestern verwendet werden.

**Patentansprüche**

1. Pyrazolonazopigment der Formel

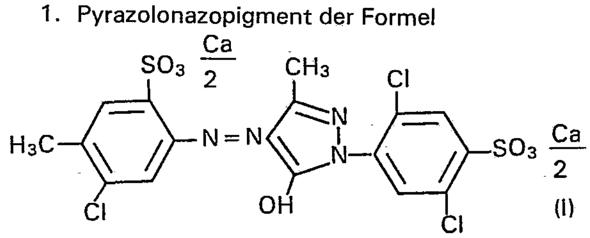

(I)

2. Verwendung des Pyrazolonazopigmentes gemäss Anspruch 1 zum Färben von Kunststoffen.

**Claims**

1. An azopyrazolone pigment of the formula

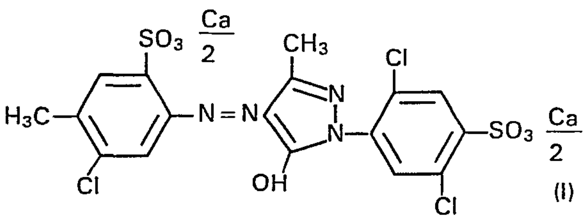

(I)

2. The use of an azopyrazolone pigment as claimed in claim 1 for colouring plastics.

**Revendications**

1. Colorant azoïque de la série de la pyrazolone de formula

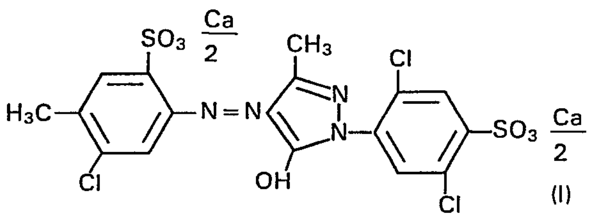

(I)

2. Utilisation du colorant azoïque de la série de la pyrazolone selon la revendication 1 pour la coloration de matières plastiques.